# EUROPEAN PATENT SPECIFICATION

(11) **EP 0 756 347 B1**
(45) Date of publication and mention of the grant of the patent: **24.03.1999**
(21) Application number: 96112130.8
(22) Date of filing: 26.07.1996
(51) Int. Cl.: H01M 8/02, H01M 8/10, H01M 8/12, H01M 8/24

(54) **Solid oxide fuel cell**
Brennstoffzelle mit Elektrolyten aus festem Oxid
Pile a combustible en oxyde solide

(30) Priority: 28.07.1995 JP 212364/95
(43) Date of publication of application: 29.01.1997
(73) Proprietor: NIPPON TELEGRAPH AND TELEPHONE CORPORATION, Shinjuku-ku, Tokyo 163-19 (JP)
(72) Inventor: Matsushima, Toshio, Sayama-shi, Saitama (JP); Ikeda, Daisuke, Tokorozawa-shi, Saitama (JP); Kanagawa, Himeko, Tokyo (JP)
(74) Representative: Tiedtke, Harro, Dipl.-Ing.

(56) References cited:
- EP-A- 0 442 743
- US-A- 5 405 712
- PATENT ABSTRACTS OF JAPAN vol. 018, no. 493 (E-1606), 14 September 1994 & JP-A-06 168729 (NIPPON TELEGR & TELEPH CORP), 14 June 1994,
- PATENT ABSTRACTS OF JAPAN vol. 94, no. 012 & JP-A-06 338336 (NIPPON TELEGR & TELEPH CORP), 6 December 1994,
- PATENT ABSTRACTS OF JAPAN vol. 95, no. 001 & JP-A-07 006776 (NIPPON TELEGR & TELEPH CORP), 10 January 1995,

## Description

This invention relates to the structure of a power generation cell of a solid oxide fuel cell.

In general, a solid oxide fuel cell (hereinafter referred to as "SOFC") basically has a structure which is consisted of an electrolyte having selective permeability of oxide ion, an air electrode and a fuel electrode. The electrolyte is disposed between the air electrode and the fuel electrode, and the individual electrodes are supplied with a gas containing oxygen or hydrogen to generate a power. Of these, the solid oxide electrolyte is required to be a dense sintered body which is required to be superior in permeability of only oxide ion but have no permeability of the gas.

As a material of the electrolyte, yttria-stabilized zirconia (hereinafter referred to as "YSZ") is used which is superior in permeability of oxygen ion. On the other hand, of the two electrodes, the fuel electrode uses a cermet of nickel (or nickel oxide) with YSZ, and the air electrode uses LaSrMnO₃ based substance as an electrically-conductive composite oxide having a perovskite type structure. Specifically, one of the points to be noted when the cell is constructed from such materials is the conductivity of the individual component. Conductivities of the three components are approximately 1000, 100, and 0.1 (S/cm), respectively, in the decreasing order of the fuel electrode, the air electrode, and the electrolyte. Of these, since the electrolyte is particularly small in conductivity, it is basically desired that the electrolyte is formed to a thin film as possible in view of the improvement of the power generation characteristics. However, when a cell is formed, the production method of the single cell and connection of a plurality of cells should be sufficiently taken into consideration. As a result, presently, a variety of structures are selected in the cell production.

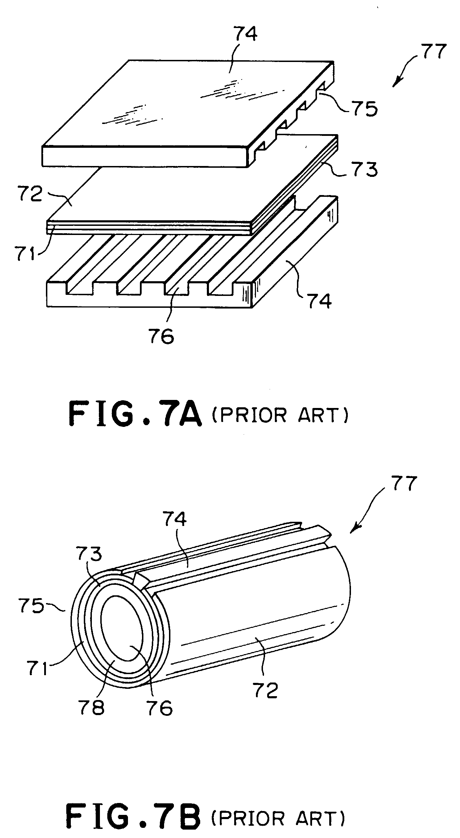

Fig. 7A and Fig. 7B show examples of cell structures of conventional SOFC produced in the past. Fig. 7A shows a flat plate type cell 77 in which an electrolyte 71 is sandwiched between a fuel electrode 72 and an air electrode 73. The electrolyte 71 has a thickness of 300 - 500 µm, the electrodes 72 and 73 have thicknesses of up to 100µm, and the entire cell has a thickness of about 500 - 700µm. The numeral 74 indicates an interconnector, and 75 is a fuel gas passage, and 76 is an oxidant gas passage.

Incidentally, to obtain such a thin three-layer structured sintered body, there is a difficulty in itself, but even if the single cell 77 can be formed, because the electrolyte 71 becomes thick in order to obtain a strength that withstands stacking for the connection of a plurality of cells, this portion has a high resistive loss, which hinders the cell characteristics. Further, in a power generation system of SOFC, such single cells have to be electrically connected in series. For this purpose, the single cells must be such that they can be piled by using connection parts having gas supply grooves. However, because the mechanical strength of such a thin film-structured cell is not high enough to withstand the piling, it is difficult to stack the single cells with a large force. As a result, contact resistance between the cells increases, and the cell performance is not always sufficient. Further, gas sealing is essential at the four sides around the cells, and it is difficult to assure a sufficient sealability. Therefore, the conventional method is not sufficiently suited for the construction of a power generation system having a practical capacity.

As an alternative, a method is considered which uses a porous inactive substance as a cell support. Fig. 7B shows a partially enlarged figure of an example of a tubular type cell using the method. This cell 77 has a structure in which the air electrode 73, the electrolyte 71, and the fuel electrode 72 are wound round in this order on the outer periphery of a support tube 78 having a hollow part as the oxidant gas passage 76. The fuel gas passage 75 is disposed on the periphery of the cell 77. The numeral 74 indicates the interconnector.

In this cell, since the power generating portion is formed on the surface of the substrate, the electrolyte can be formed substantially thin, which, as described above, meets the requirement of SOFC cell that the electrolyte film be formed thin. Further, since the cell is supported by the support tube, it has a high strength and stacking is easy. However, in this cell, as a problem inherent to the shape of the cell, since current during power generation flows along the electrode layer, there is a large voltage drop in this portion, and high power generation characteristics are not achieved.

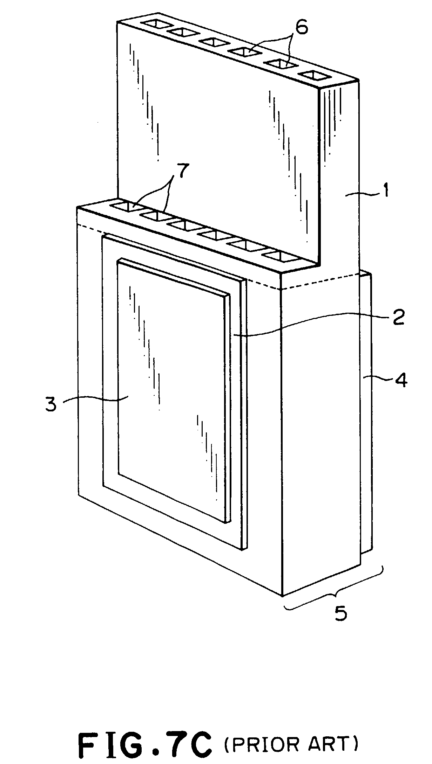

Then, to reduce voltage drop due to current flow along the electrode layer occurring in a tubular type cell, a method is proposed which uses a hollow flat plate-formed porous electrode as a cell substrate. Fig. 7C shows a cell of this type (Japanese Patent Application Laid-open No. 168729/1994). In the cell of this type, first, since a thin film electrolyte can be formed as in the tubular type shown in Fig. 7B, and, further, the cell substrate comprises the porous electrode having a conductivity, the current during power generation can be flowed perpendicular to the cell, and power generation characteristics better than the tubular type can be expected. However, in the cell of Fig. 7C, the gas flow passage provided in the electrode as the substrate is formed in two stages, gas supplied to the passage of one stage is preheated as it passes through there, after being turned back at the innermost of the substrate, and reaches the gas passage immediately beneath the power generation portion, where a reaction takes place. As described above, since the gas is preheated in the supply passage, a longer dwell time in the supply passage is advantageous to achieve sufficient preheating. However, from the shape of the gas flow passage shown in the Figure, the supply passage and the discharge passage have the same cross-sectional forms, flow rates of the individual supplied gas are the same in the individual passages. Therefore, gas preheat is insufficient only in the supply passage, and preheat is continued after passing through the return back portion and after reaching the discharge passage, where the power generation reaction should be made. As a result, a predetermined temperature is attained in the discharge passage, decreasing the surface area of the power generation portion effectively acting upon the power generation reaction, resulting in a reduced amount of power generation reaction as a whole.

As described above, a cell having sufficient power generation characteristics has not been achieved with a cell of the prior art structure.

The present invention relates to a self supporting film type SOFC which uses a hollow flat plate type substrate as a cell substrate comprising the electrode material and having therein a gas flow passage, discloses details of the structure of the single cell and the stack. A primary object of the present invention is to improve thin film formation of the electrolyte and gas sealability and easily achieve a high performance SOFC.

The present invention provides a solid oxide fuel cell as defined in claim 1.

Preferred embodiments are put forth in claims 2-6.

A total cross sectional area of the gas supply passage provided in the cell substrate may be larger than a total cross sectional area of the return passage.

When the supply passage and the return passage are the same in cross sectional shape, the number of stages of the gas flow passage used for the supply passage may be more than that of the return passage.

Small holes communicating the individual flow passages may be provided in a partition wall between the gas flow passages of the supply passage and the return passage.

Each single cell may be mounted in the state of face contact in series through a material having a gas permeability and a conductivity and, in this state, encased in a shell having a gas supply chamber for supplying gas to the supply passage in the cell substrate, a discharge chamber of the gas returned from the return passage, and a power generation chamber supplied with the gas corresponding to the second electrode, of the gas flow passages, the supply passage may be opened to the gas supply chamber, the return passage may be opened to the gas discharge chamber, and the single cell unit may be disposed in the power generation chamber supplied with the gas corresponding to the second electrode.

(La₁₋ₓSrₓ)yMnO₃ may be used as the first electrode material constituting the cell substrate, nickel zirconia cermet as the second electrode material, and a zirconium oxide doped with yttrium oxide as the electrolyte.

The above and other objects, effects, features and advantages of the present invention will become more apparent from the following description of the embodiments thereof taken in conjunction with the accompanying drawings.
Fig. 1A is a schematic perspective illustration of a single fuel cell of the first embodiment of the present invention;
Fig. 1B is a schematic A-A' cross sectional view of a single fuel cell of the first embodiment of the present invention;
Fig. 1C is a schematic B-B' cross sectional view of a single fuel cell of the first embodiment of the present invention;
Fig. 1D is a schematic C-C' cross sectional view of a single fuel cell of the first embodiment of the present invention;
Fig. 2A is a schematic perspective illustration of a single fuel cell of a second embodiment of the present invention;
Fig. 2B is a schematic D-D' cross sectional view of a single fuel cell of the second embodiment of the present invention;
Fig. 3 is a schematic perspective illustration of a single fuel cell of a third embodiment of the present invention;
Fig. 4A is a schematic C-C' cross sectional view of a power generation module incorporated with the single cell of the present invention;
Fig. 4B is a schematic A-A' cross sectional view of a power generation module incorporated with the single cell of the present invention;
Fig. 4C is a schematic B-B' cross sectional view of a power generation module incorporated with the single cell of the present invention;
Fig. 4D is a schematic plan view of a cell holding plate of the present invention;
Fig. 4E is a schematic D-D' cross sectional view of the cell holding plate.
Fig. 5A is a schematic plan view showing a production method of an electrode substrate of the present invention by an extrusion method;
Fig. 5B is a schematic side view showing a production method of the electrode substrate of the present invention by an extrusion method;
Fig. 5C is a schematic view showing a production method of the electrode substrate of the present invention by an extrusion method;
Fig. 6 is a schematic view showing a production method of an electrode substrate of the present invention by a sheet lamination method;
Fig. 7A is a schematic view showing the structure of a single cell of a prior art flat plate type fuel cell;
Fig. 7B is a schematic view showing the structure of a single cell of a prior art tubular type fuel cell;
Fig. 7C is a schematic view showing the structure of a prior art hollow flat plate type fuel cell;
Fig. 8A is a schematic view showing the structure of a single fuel cell of a fourth embodiment of the present invention (a cell having a larger sectional area of the supply passage than the return passage);
Fig. 8B is a schematic A-A' cross sectional area of a single fuel cell of the fourth embodiment of the present invention;
Fig. 8C is a schematic C-C' cross sectional area of a single fuel cell of the fourth embodiment of the present invention;
Fig. 9 is a schematic view showing gas flow and diffusion conditions in a single cell to which the present invention is applied;
Fig. 10A is a graph showing a gas temperature rise in a single cell to which the present invention is applied;
Fig. 10B is a graph showing the current density at a power generation portion in a single cell applied with the present invention.

A major feature of the present invention is that a hollow flat plate type substrate in which a plurality of passages used for supply and discharge of a gas being formed of the electrode materials are disposed in multi-stages, and on the surface of which are formed layers of the electrolyte and other electrodes. Heretofore, there have been used a type in which a tubular pipe comprising an inactive substance is used as a support tube, and electrolyte and electrodes are formed on the surface, and a type in which three layers are formed in a flat form as a flat plate type cell. However, there has not been present one using a cell substrate in which a plurality of gas supply and return passages are provided in stages in the substrate as in the present invention, and openings thereof are disposed on one side. Further, another feature of the cell is that the gas supply port and discharge port to the substrate are disposed on the same side surface. As a result, when a stack is formed, this substrate is mounted, only the side where the openings are present is gas sealed, and the gases flowed in and outside the substrate can be separated. Heretofore, there has not been present a single cell or a fuel cell using the cell structure or gas supply system like the present invention.

In the present invention, multi-stage gas passage provided in a hollow flat porous electrode are used for gas supply and discharge, in this case, since the gas flow rate in the supply passage is reduced compared to the return passage, when the sectional shapes of the supply and return passages are the same, a more number of stages are used for the supply passage than for the return passage, or when the number of stages of the supply passage is equal to that of return passage, the sectional area of the supply passage is made larger than that of the return passage. This allows sufficient preheat of the gas in the supply passage and, after passing through the turn back portion and when the return passage is reached, supply of sufficiently preheated gas.

Further, by reducing the gas flow rate in the supply passage, some of the gas can be diffused in the substrate as porous sintered body and supplied into the return passage to generate a power, thereby achieving uniform power generation reaction of the entire substrate in conjunction with the power generation reaction occurring after the turn back portion of the return passage.

Still further, to promote the gas diffusion between the supply and return passages, in the present invention, it is made possible to provide small holes communicating the individual passages in the partition wall between the gas supply and return passages. This further enhances the effect of uniformization of power generation reaction by the partial diffusion of the gas in the substrate, which is described above.

### EMBODIMENTS

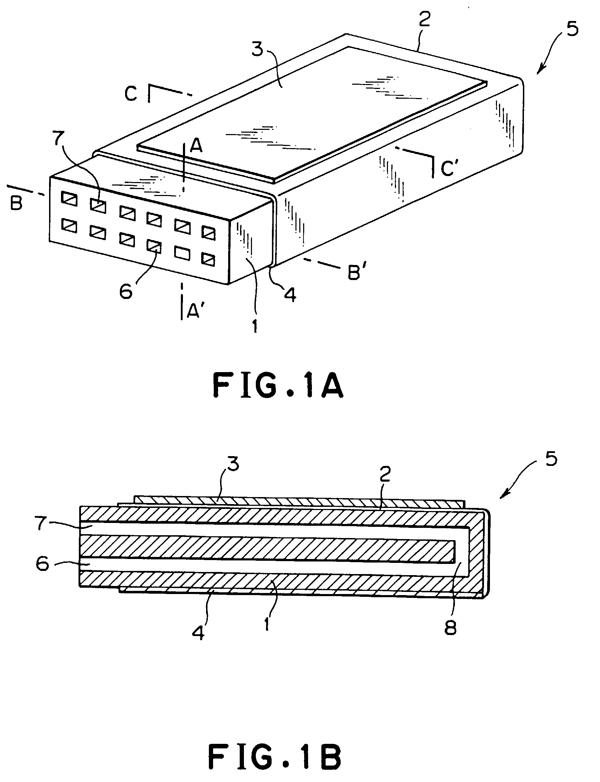

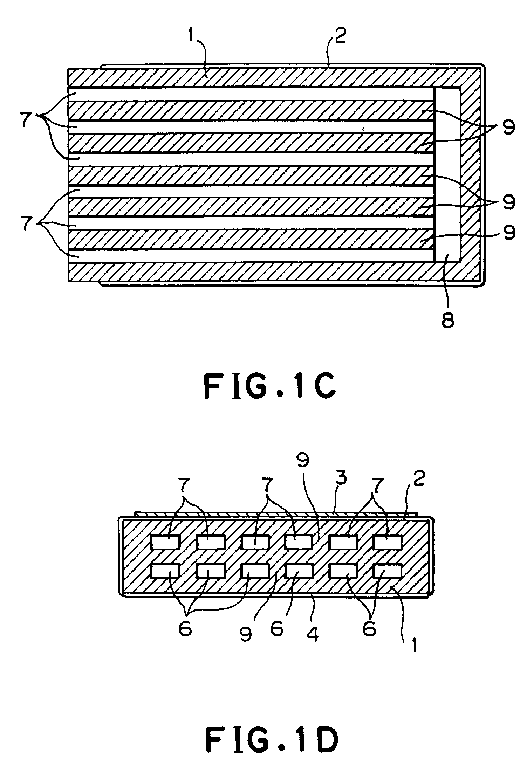

Fig. 1A, Fig. 1B, Fig. 1C, and Fig. 1D show an embodiment of the structure of a single cell of the solid oxide fuel cell according to the present invention, of which Fig. 1A is a perspective view, Fig. 1B is an A-A' cross sectional view, Fig. 1C is a B-B' cross sectional view, and Fig. 1D is a C-C' cross sectional view. A single cell 5 of the present invention comprises a power generation portion in which individual layers of a solid oxide electrolyte 2 and a second electrode 3 are formed on one surface of an electrode substrate 1 of such a structure, and an interconnector 4 is provided on the opposite side to the surface on which the power generation portion is formed. Materials of the individual parts will be described in detail in the embodiment of cell construction, but the substrate (air electrode) is based on a LaSrMnO₃ composite oxide, the second electrode is based on a nickel zirconia cermet, and the electrolyte is based on YSZ. Further, the interconnector 4 is made of a LaCrO₃ based substance which is stable under an oxidation-reduction environment. Yet further, the numeral 6 indicates a gas supply passage, 7 is a gas return passage, 8 is a gas turn back portion in the substrate, and 9 is a support for supporting the upper and lower parts of the substrate.

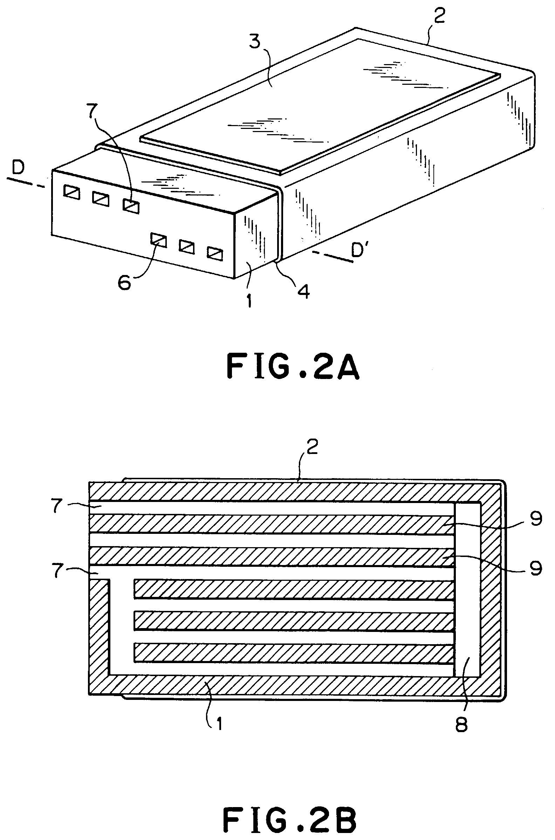

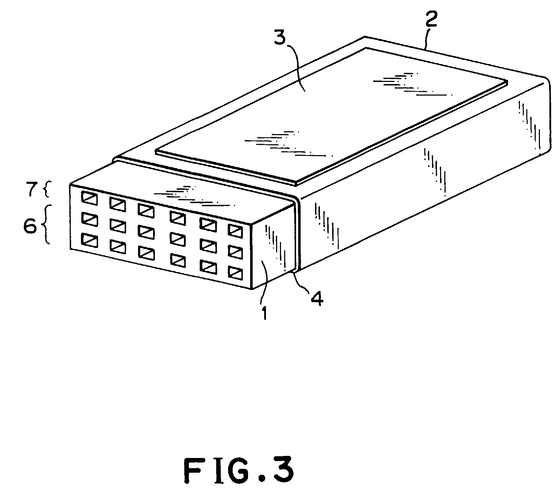

Fig. 2A, Fig. 2B and Fig. 3 show other embodiments of a single cell of the solid oxide fuel cell according to the present invention. In the embodiment of Fig. 2A and Fig. 2B, when a module is formed, inlets of the gas supply passage 6 and gas discharge passage 7 into the substrate are narrowed in order to enhance the gas separation effect at the supply port of the gas supply passage 6 into the substrate and the discharge port of the gas discharge passage 7. Further, in Fig. 3, the gas passages 6 and 7 are formed in three stages and, in this example, the lower two stages are used as the supply passage (gas supply passage 6), and the upper stage is used as the return passage (gas discharge passage 7). However, selection of the number of these passages is flexible and, considering a gas preheating effect, the number of supply passage and the return passage can be appropriately selected.

In the present invention, the single cell 5 is formed in this structure to ensure the cell strength. Therefore, the electrolyte may be as thin as several to several tens of µm, thereby substantially reducing the resistance of the electrolyte which is largely concerned with the cell performance. Further, the substrate is formed of an electrode material of high conductivity, is not simply hollow shaped, but is provided therein with a support. Therefore, since the current flows through the support of the substrate, the resistance can be prevented from increasing. As a result, even if the thickness of the hollow substrate is increased to about 1 cm, a decrease in resistance due to the thin film formation of the electrolyte is greater than an increase in resistance of the substrate due to the increase in the thickness, which is not a problem in view of the entire cell. Further, the gas supplied to the individual electrodes are perfectly separated between the inside and outside of the electrode substrate. Cross leak of the individual gases can be positively prevented by providing a seal on one side of the cell. Yet further, the gas flow passages in the substrate are formed in multiple stages, the individual passages are supply and return passages, and since these passages communicate with each other at the innermost of the substrate, after the gas reaches the innermost of the substrate, it is turned back to be supplied to the reaction section, and the gas can be preheated during this period. In this case, the gas supply port and the discharge port are located on the same side surface, but are not positioned on the same straight line. Therefore, separation of the individual gas can be effectively achieved by sealing the side surface where the gas supply port and the gas discharge port exist.

In the prior art flat plate type, a self supporting type cell in which the electrolyte itself is used as a pillar, provided with two electrodes on the surface, the electrolyte which is to be formed to a thin film cannot be formed thin in order to ensure the cell strength, which is a main cause of resistance of the entire cell. Further, sealing is required on the four sides around the cell. However, the present invention has not such a problem. Further, although the electrolyte can be formed to a thin film in the prior art tubular type cell, the power generation current flows in the horizontal direction in the electrode layer, which results in an increase in resistance. However, with the cell according to the present invention, the current is flowed in the direction vertical to the substrate by using a hollow flat substrate, thereby preventing a specific current flow occurring in the tubular type with no degradation of the power generation characteristics.

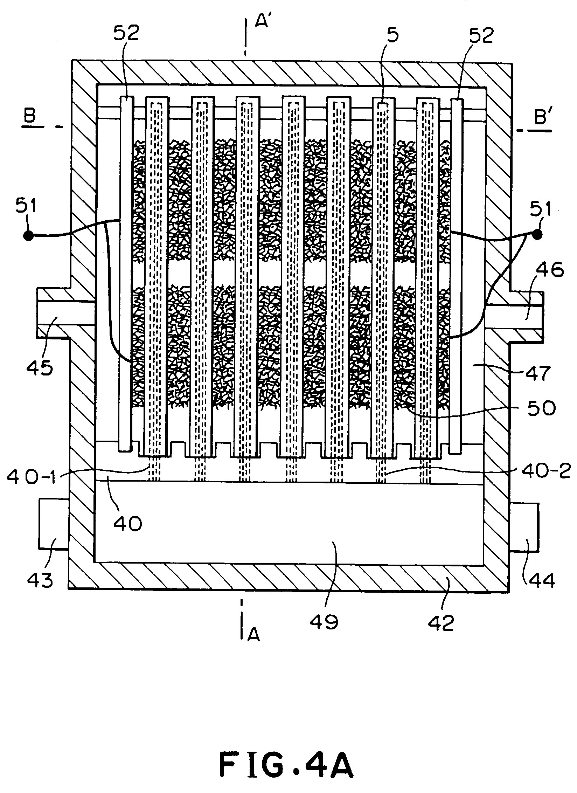

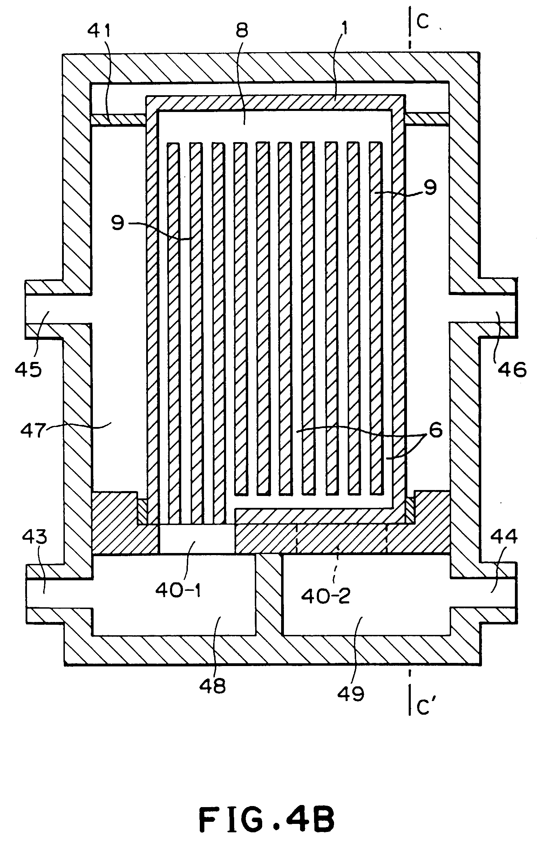

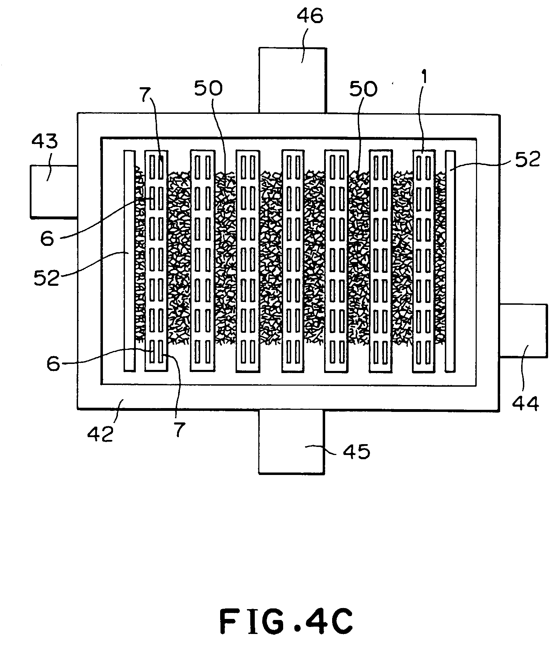

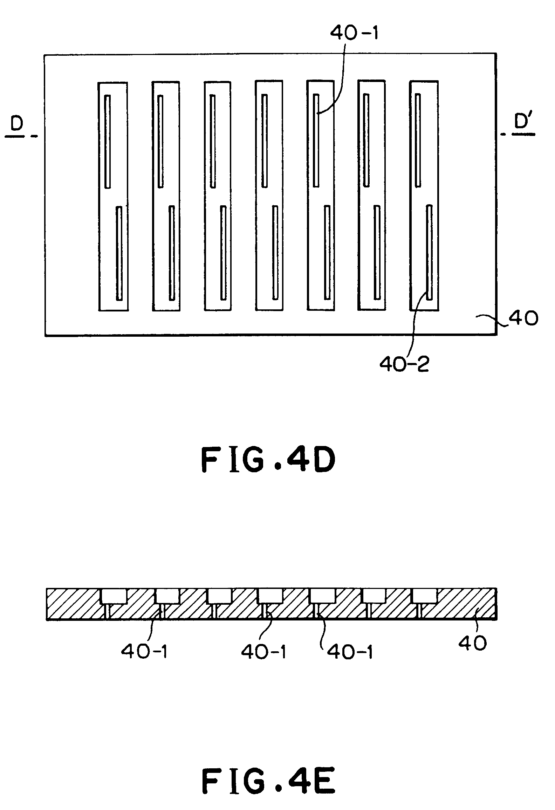

Next, the structure of a power generation module constructed by combining the thus produced single cells 5 will be shown. Fig. 4A, Fig. 4B, Fig. 4C, Fig. 4D, and Fig. 4E show combination examples of the power generation module in the present invention. Here, a module using the single cells as shown in Fig. 2A and Fig. 2B will be described.

In the Figures, the numeral 40 indicates a cell holding plate, 40-1 is a gas supply slit, 40-2 is a gas discharge slit, 41 is a cell supporting plate, 42 is a shell, 43 is an oxidant gas supply port, 44 is an oxidant gas discharge port, 45 is a fuel gas supply port, 46 is a fuel gas discharge port, 47 is a power generation chamber, 48 is an oxidant gas supply chamber, 49 is an oxidant gas discharge chamber, 50 is a conductive spacer, 51 is a conductor, and 52 is a seal. (In the Figures, for the description of the structure, the fuel gas supply port 45 and the fuel gas discharge port 46 or the oxidant gas supply port 43, the oxidant gas discharge port 44 are shown on the right and left side surfaces of the shell 42, they are located on the front (or backside) surface of the paper in view of improvement of contact of the gas with the fuel electrode or the gas with the air electrode.)

In constructing the module, the single cell 5 is positioned by the cell supporting plate 41 and the cell holding plate 40 and, in this state, encased in the shell 42. The cell holding plate 40 for holding the single cell 5 is provided with the gas supply slit 40-1 and the gas discharge slit 40-2, whereby making gas supply to the substrate and discharge of gas unused in the reaction. On the other hand, the fuel gas is supplied from the fuel gas supply port 45 to the power generation chamber 47, and unreacted fuel and water vapor as a reaction product are discharged from the fuel gas discharge port 46 to the outside. As shown in the Figure, conductive spacers 50 comprising a material which is superior in gas permeability such as nickel felt are disposed between the single cells, and the individual cells are assembled in a face contact state. Therefore, the individual cells are electrically connected in series, and the fuel gas can be efficiently supplied to the power generation section without hindering diffusion of the gas between the individual cells to generate a power.

Next, operation of the SOFC of the present invention will be described.

In the operation of the SOFC of the present invention, similar to the conventional SOFC, the power generation module is installed under the temperature condition of 900 to 1000°C, and each gas is supplied. The oxidant gas is supplied from the oxidant gas supply port 43, reaches and passes inside of each single cell 5 through the gas supply slit 40-1, preheated during this time, after passing through the turn back portion, and reaches the cell formation section, where the reaction takes place, and then the residual gas reaches the oxidant gas discharge chamber 49. Therefore, of the gas passages provided in the substrate, the portion before the turn back portion acts as a gas preheating portion. On the other hand, the fuel gas is supplied from the fuel gas supply port 45 provided on the side surface of the shell 42 to the inside of the power generation chamber 47, where power generation is carried out. At this time, although the supplied fuel gas flows into gaps of the porous conductive spacers 50 disposed between the individual cells where it reacts, diffusion of the fuel gas to the electrode is carried out without disturbance. Then, the fuel gas which is not consumed by the reaction in this portion is discharged from the fuel gas discharge port 46 to the outside of the shell 42.

A major advantage of the module using the single cell of the above-described structure is that the supplied gas can be preheated within the substrate. That is, since the gas passage is formed in stages in the substrate, in the supply passage no reaction takes place until reaching the innermost portion of the substrate, and after passing through the turn back portion the entire surface is supplied with the gas to start the reaction. Therefore, as in gas supply method of the prior art flat plate type cell, since gas supply to the entire surface of the cell is made simultaneously, the power generation reaction in the cell can be uniformized. Further, the gas before being used for power generation is preheated when it flows in the substrate, since the gas absorbs heat at this time, thereby preventing local heating in the substrate and positively contributing to the uniform temperature distribution in the module. On the other hand, when the gas supply and return passages are formed in the same stage in the substrate, the reaction takes place in the gas supply passage and the return passage, since the gas concentration in the individual passages is high only in the supply passage, an unbalance occurs in the power generation causing a distribution of temperature in the right and left portions of the substrate, which may lead to a damage to the substrate due to a thermal stress. However, with the structure of the present invention, occurrence of local heating and temperature distribution within the substrate can be prevented.

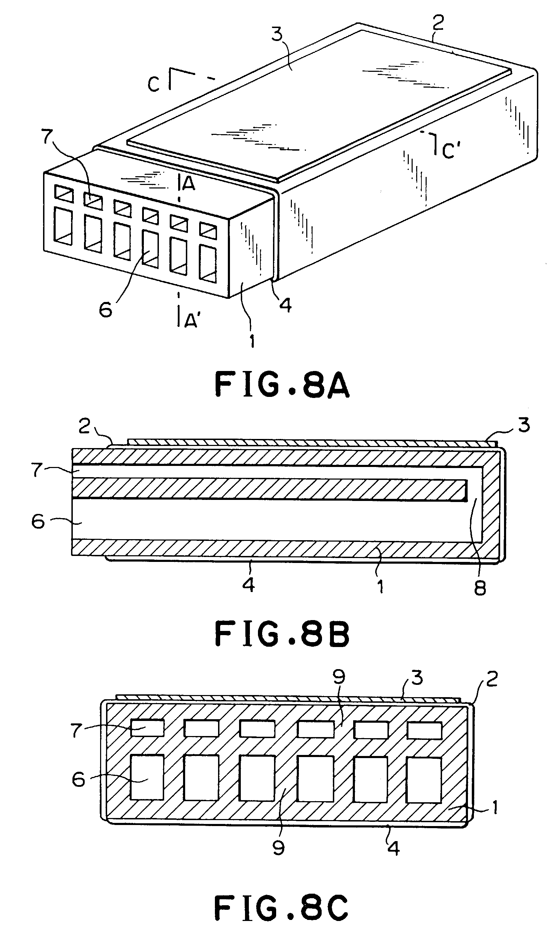

Fig. 8A, Fig. 8B, and Fig. 8C show the single cell cross sectional structure of another embodiment of the solid oxide fuel cell according to the present invention. Fig. 8A, Fig. 8B, and Fig. 8C show a case where the cross sectional area of the supply passage is larger than that of the return passage, and the flow passages differ in shape between the supply passage and return passage. An example where the individual passages are the same in shape, and a plurality of stages of gas passage are used in the supply passage is as already shown in Fig. 3.

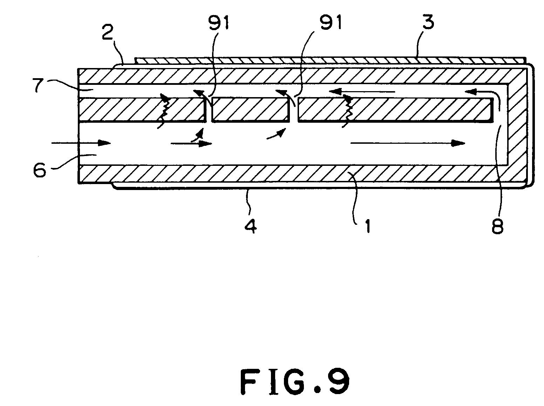

Fig. 9 shows a cross sectional view taken parallel to the flow passage of the substrate shown in Fig. 8A, gas flow in the passage, and gas diffusion condition in the substrate. As shown, the gas flowing into the supply passage, while being preheated in the supply passage, reaches the return passage through the turn back portion and, at the same time, part of the gas partly diffuses to the return passage side after flowing in to begin the reaction there. In addition, at this time, small holes 91 can be provided in the partition between the supply passage and the return passage, thereby promoting gas diffusion from the supply passage to the return passage.

As described above, in the present invention, even when the passages are the same in shape, the supplied gas can be supplied to the entire surface after it is passed through the turn back portion in the substrate, thereby starting the efficient reaction. This is similar to the gas supply method of the prior art flat plate type cell. However, depending on the flow rate of the supplied gas, the power generation reaction rate is high at the portion after passing through the turn back portion and flowing into the return passage, there may be a danger of occurrence of local heating at this portion. However, with the substrate of the structure as shown in Fig. 8A, the gas in the supply passage is sufficiently preheated, and gas diffusion is partially made from the supply passage to the return passage to promote power generation reaction, thereby suppressing local heating in the substrate.

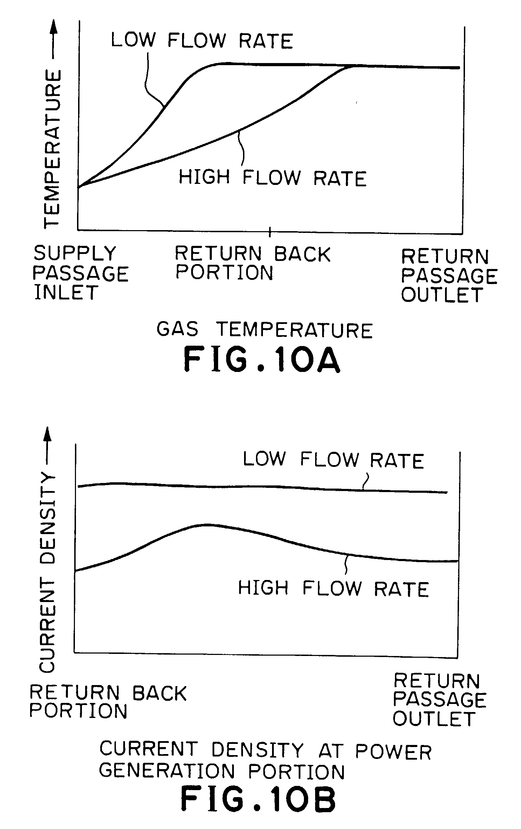

Fig. 10A and Fig. 10B individually show the increasing condition of the gas temperature in the supply passage and the return passage (Fig. 10A), and changes in the generation current density along the gas flow passage on the surface of the power generation section (Fig. 10B), when the gas flow rate in the supply passage is decreased or not. It can be seen from the Figures that gas preheating is sufficiently made by reducing the gas flow rate in the supply passage. Further, from the current density in the power generation section at this time, it can be seen that the generation current density is high as a whole, with a small bias in the distribution. On the other hand, when the gas flow rate in the supply passage is not reduced, increase of the gas temperature is delayed, and preheating is still made after reaching the return passage, and the distribution of the generation current density becomes large. Further, the generation current value is low as a whole and, as a result, the total power generation amount is decreased.

Next, a detailed embodiment of construction method of the single cell of the present invention will be described. In the present invention, a substrate having therein gas passages is produced from the electrode material, and on one side of which the electrolyte and the other electrode are formed. In this embodiment, a hollow substrate was first produced from the electrode material, then the electrolyte and the other electrode were formed thereon.

As an electrode material to form the substrate, (La₁₋ₓSrₓ)MnO₃ having a perovskite structure was adopted which is generally used as an air electrode material of SOFC, of which powders of La_{0.8}Sr_{0.2}MnO₃ and La_{0.9}Sr_{0.1}MnO₃ having a diameter 1 - 3µm were used. The substrate was produced by an extrusion method, and the power generation cell was formed on the sintered body.

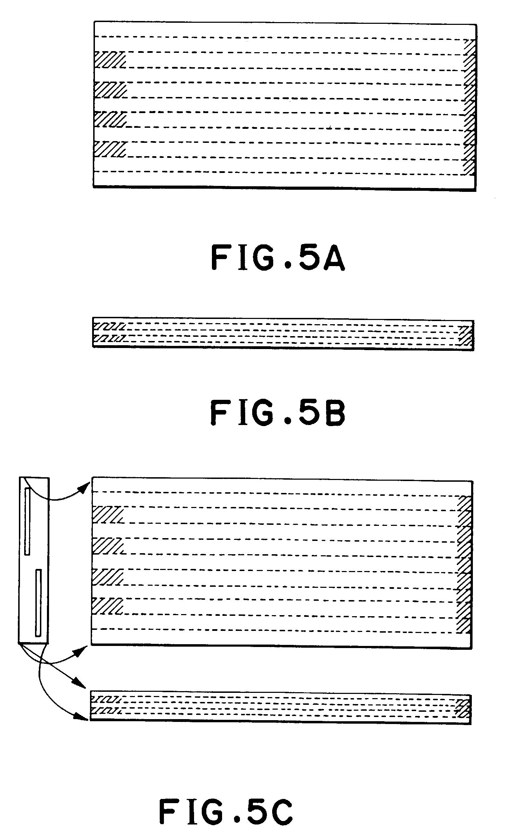

Extrusion molding can be easily carried out by using a die having the same as the cross section of the substrate. The thus produced molding was partially processed and then sintered to obtain a substrate same as the objective one. The partial processing is the same as processing of the portion corresponding to the tip and the inside of the base portion of the substrate. In the processing, as shown in Fig. 5A, Fig. 5B, and Fig, 5C, the inside at both the tip and base was partially cut (the hatched parts in Fig. 5A to Fig. 5C), where a part comprising the same material was mounted to be integrated (Fig. 5C).

Extrusion molding requires a clayey material, and to obtain such a material, the raw material powder was mixed with the following additives.

| | |
|---|---|
| Raw material powder | 100 |
| Binder | up to 5 |
| Plasticizer | 2 - 5 |
| Solvent | 10 - 15 |

As the binder, a methyl cellulose type water-soluble polymer (METOLOSE 60SH-4000 manufactured by Shin-Etsu Chemical) was used. In extrusion, finishing of the molding is largely affected by the viscosity of the material, for example, when the amount of water is low, the extrusion pressure becomes high, which may cause cracking during molding, or when the water content is high, it may become difficult to maintain the hollow structure. After trials as to the mixing ratio, it was possible to produce a satisfactory molding with the above-described mixing ratio.

In addition, drying of water and burn out of binder are required in the sintering of the extrusion molded body. After the molding was thoroughly dried, it was burned out at about 400°C which was selected according to the decomposition temperature of the binder. It was sintered at 1250 to 1350°C for up to 10 hours to produce an air electrode hollow substrate having outer size of 70 × 150(mm) and thickness of up to 8mm. Further, since the progress of sintering is affected by the particle size of the raw material powder used, the temperature and time was selected taking such an influence into consideration. Thus, a sintered body with a porosity of 25 to 35% was obtained. It had a conductivity of about 100 S/cm at 1000°C.

On the thus produced electrode substrate, an interconnector was formed by a plasma spray method. The spray machine used was of an air plasma spray type, and a La_{0.9}Ca_{0.1}CrO₃ powder was sprayed to form a film with a thickness at around 100 µm having a gas permeability on the order of 10⁻⁷ (cc·cm/sec·(g/cm²)cm²).

After that, the electrolyte and fuel electrode thin films were formed by an EVD method. As an EVD apparatus, an "electrochemical deposition apparatus" (Japanese Patent Application Laid-open No. 73546/1994) was used to form the films using yttrium chloride and zirconium chloride as raw materials at a temperature of 900°C and a reaction pressure of 1 Torr. As the electrolyte, a composition of zirconium oxide mixed with 8 mol % of yttrium oxide to stabilize the crystal structure (YSZ) was used. The thickness of the film-formed YSZ was about 20µm. Then, on the YSZ film, a fuel electrode was formed. To form the electrode, a nickel metal powder in the form of a slurry was coated on the YSZ film, and then subjected to EVD under the same conditions.

Next, an embodiment of simultaneous formation of substrate and electrolyte/electrode films by a co-firing method will be described.

In the co-firing method, a sheet-formed molding of each material is formed by a doctor blade method, and these sheets are appropriately laminated and thermally fused to form a green body of the hollow substrate, which is then sintered. The doctor blade method requires a high-viscosity slurry, and the slurry was obtained by the following mixing ratio (by weight).

| | |
|---|---|
| Raw material powder | 100 |
| Binder | 10 - 15 |
| Plasticizer | 5 - 10 |
| Solvent | 200 |

As the binder, poly vinyl butyral was used, di-n-butyl phthalate was used as the plasticizer, and iso-propyl alcohol was used as the solvent. The reason why the amounts of the binder and the plasticizer have some ranges is that the particle size and surface area differ depending on the materials used, and the properties and shrinkage of the slurry become different, which are to be appropriately adjusted. It is important in co-firing that the shrinkage of the green sheet of the subject material is made as uniform as possible and, for this purpose, the mixing ratio of the slurry is adjusted. After such a slurry was agitated by a ball mill for about 24 to 48 hours, it is deaerated under a vacuum to remove the solvent and adjust the viscosity, and then a sheet-formed molding was obtained by a doctor blade apparatus. Such sheets were cut to a predetermined size, and heat pressed under conditions of 70-80°C and 30-70 kg/cm² to produce a fused body of the sheets. Shape of each part of the hollow body could be flexibly modified to the desired shape by changing the shape or number of the sheets to be stacked in this stage.

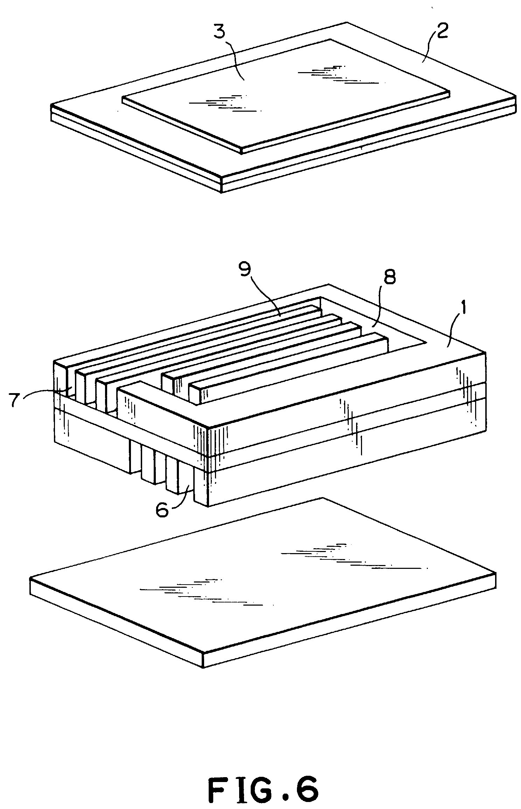

A method for producing the hollow substrate of the present invention by heat pressing of the sheets is schematically shown in Fig. 6. Such a pressed body of the sheets was burned out and then sintered to obtain a single cell comprising the substrate and the electrolyte and electrodes formed. The burn out and sintering conditions were almost the same as those for the extrusion molded body described above. Finally, an about 100 µm thick interconnector comprising La_{0.9}Ca_{0.1}CrO₃ was formed on the sintered body using the plasma spray apparatus shown above. Further, the side of the substrate with insufficient interconnector formation was coated with glass paste to ensure gas sealability of the substrate.

As described above, in the SOFC of the present invention, an electrode substrate is produced which has a structure having a plurality of passages for permeating the gas, the passages being formed in multiple stages in the inside to form supply passages and return passages, on the surface of which the electrolyte and other electrodes are formed to yield a cell. These cells are face contacted through conductors and encased in a shell to form a module.

Before the present invention, there were SOFCs represented by the flat plate type and the tubular type. However, in the flat plate type, it was difficult to reduce the cell resistance, further, a gas sealing was indispensable, and it was difficult to ensure gas sealability over an extended period of time under the present circumstances where a glass-based sealing agent must be used. Further, there was a danger of damaging the cell during temperature increase because a force may be generated and added to each single cell due to the softening temperature of the glass-based material. On the other hand, the tubular type has an advantage that the cell strength is high since the power generation section is formed on the surface of the support, and the electrolyte can be formed substantially thin. However, to the contrary, as a problem coming from the cell shape, since the current of power generation flows along the electrode layer , there is a large voltage drop in this portion, and high power generation characteristic cannot be achieved.

Further, in addition to the above two methods, there was a method which uses a hollow flat plate-formed porous electrode as a cell support.

In the cell of this type, the cell support comprises a porous electrode having a conductivity, and it can be expected to have power generation characteristics superior to the tubular type. However, the electrode used as the support is provided with gas passages formed in two stages, a gas supplied to one of the stages is preheated during passing there and, after turned back at the innermost of the support, reaches the gas passage just beneath the power generation section where the reaction is started. Although a longer dwell time in the supply passage is advantageous to achieve sufficient preheating, from the shape of the gas passages shown here, since the supply passage and the return passage are the same in cross sectional shape, the flow rates of the supplied gas in the individual passages are the same, gas preheating is insufficient only in the supply passage. Preheating is continued even after passing through the turn back portion and reaching the return passage where the power generation reaction is to be carried out. Therefore, the predetermined temperature is reached in this return passage, which results in a reduction in the power generation section area effectively acting for the power generation reaction, and there is a defect in that the power generation amount is decreased as a whole.

On the other hand, in the cell of the present invention, the two types of gas required for the reaction are completely separated between inside and outside of the substrate until the reaction is completed, and because sealing is necessary for only one portion of the cell, the module can be assembled without gas leakage from the periphery of the cell as seen in the prior art flat plate type cell. Further, inside the module, connection of the individual single cells is achieved by an elastic porous conductor. Therefore, electrical connection between cells can be assured even if the flatness is not high as required in the prior art cell, and the module can be easily assembled.

Further, in the present invention, gas passages of a plurality of stages for gas supply and discharge are provided in the hollow flat plate-formed porous electrode, in this case, to reduce the flow rate of the gas in the supply passage as compared to the gas flow rate in the return passage, the number of stages of the gas passage used in the supply passage is greater than that of the return passage, or the supply passage is made larger in cross sectional area compared with the return passage. This allows sufficient preheating of the gas in the supply passage, a sufficiently preheated gas can be supplied at the time the gas passes through the turn back portion and reaches the return passage. Yet further, by reducing the gas flow rate in the supply passage, part of the gas can be diffused in the substrate as the porous sintered body and supplied to the return passage to generate a power, which, in combination with the power generation reaction occurring at the turn back portion of the passage, enables uniform power generation reaction in whole substrate and then enables uniform temperature distribution in whole substrate, thereby preventing the substrate from being damaged by a thermal stress due to a temperature distribution. Yet further, by efficient gas preheating and partial gas supply by diffusion, uniform power generation reaction over the entire substrate and an increased generation amount can be achieved.

Still further, in the present invention, to promote such gas diffusion between the supply passage and the return passage, small holes communicating with the individual passage can be provided in the partition wall between the supply passage and return passage, and uniformization of power generation reaction by gas diffusion is possible even when the outer dimensions of the substrate are large and the flow passage is long.

Prior art flat plate type and tubular type SOFC had a major disadvantage that a cell itself which has sufficient power generation characteristics is difficult to be achieved. However, in the present invention, as a result of the above-described cell structure, various problems of the prior art cell are eliminated, and an SOFC having high power generation characteristics can be achieved, which is very advantageous for the industry.

## Claims

1. A solid oxide fuel cell comprising an electrode, a solid electrolyte, and an interconnector, wherein a single cell comprises said electrolyte formed on a first main surface of a cell substrate formed of a first electrode material, a second electrode is formed on top of said electrolyte, and said interconnector is formed on a second main surface differing from the surface formed with said electrolyte, said cell substrate is porous, flat-formed, and has therein a plurality of flow passages of the gas corresponding to the first electrode material, the flow passage of said gas is formed in multiple stages in the substrate, forming a plurality of gas flow passages as supply passages and a plurality of gas flow passages as return passages, these supply passages and return passages communicate with each other at a gas turn back portion in the substrate, and openings of said supply passage and said return passage are located on a side surface of the substrate
**characterized in that**
the gas flow passage provided in the cell substrate has a structure so that the flow rate in the supply passage of the gas supplied to the cell substrate is slower than the flow rate of the gas in the return passage.

2. The solid oxide fuel cell as claimed in claim 1,
**characterized in that**
a total cross sectional area of the gas supply passage provided in the cell substrate is larger than a total cross sectional area of the return passage.

3. The solid oxide fuel cell as claimed in claim 2,
**characterized in that**
when the supply passage and the return passage are the same in cross sectional shape, the number of stages of the gas flow passage used for the supply passage is mere than that of the return passage.

4. The solid oxide fuel cell as claimed in claim 1,
**characterized in that**
small holes communicating the individual flow passages are provided in a partition wall between the gas flow passages of the supply passage and the return passage.

5. The solid oxide fuel cell as claimed in claim 1,
**characterized in that**
each single cell is mounted in the state of face contact in series through a material having a gas permeability and a conductivity and, in this state, encased in a shell having a gas supply chamber for supplying gas to the supply passage in the cell substrate, a discharge chamber of the gas returned from the return passage, and a power generation chamber supplied with the gas corresponding to the second electrode, of the gas flow passages, the supply passage is opened to the gas supply chamber, the return passage is opened to the gas discharge chamber, and the single cell unit is disposed in said power generation chamber supplied with the gas corresponding to the second electrode.

6. The solid oxide fuel cell as claimed in claim 1,
**characterized in that**
(La₁₋ₓSrₓ)_{y}MnO₃ is used as the first electrode material constituting the cell substrate, nickel zirconia cermet as the second electrode material, and a zirconium oxide doped with yttrium oxide as the electrolyte.

## Patentansprüche

1. Festoxidbrennstoffzelle mit einer Elektrode, einem Festelektrolyten und einer Kupplungsleitung, wobei eine Einzelzelle den Elektrolyten aufweist, der an einer ersten Hauptoberfläche eines aus einem ersten Elektrodenmaterial gebildeten Zellensubstrats gebildet ist, wobei eine zweite Elektrode oben auf dem Elektrolyten gebildet ist und die Kupplungsleitung an einer zweiten Hauptoberfläche gebildet ist, die sich von der mit dem Elektrolyten gebildeten Oberfläche unterscheidet, wobei das Zellensubstrat porös, flach ausgebildet ist und darin eine Vielzahl von Flußpassagen des dem ersten Elektrodenmaterial zugeordneten Gases hat, wobei die Flußpassage des Gases in dem Substrat in Mehrfachstufen gebildet ist, wodurch eine Vielzahl von Gasflußpassagen als Zuführpassagen und eine Vielzahl von Gasflußpassagen als Rückführpassagen gebildet ist, diese Zuführpassagen und Rückführpassagen an einem Gasrückschwenkabschnitt in dem Substrat miteinander in Verbindung stehen und Öffnungen der Zuführpassage und der Rückführpassage an einer Seitenoberfläche des Substrats angeordnet sind,
**dadurch gekennzeichnet, daß**
die in dem Zellensubstrat vorgesehene Gasflußpassage eine derartige Struktur hat, daß die Flußrate in der Zuführpassage des zu dem Zellensubstrat gespeisten Gases langsamer ist als die Flußrate des Gases in der Rückführpassage.

2. Festoxidbrennstoffzelle nach Anspruch 1,
**dadurch gekennzeichnet, daß**
ein Gesamtquerschnittsbereich der in dem Zellensubstrat vorgesehenen Gaszuführpassage größer ist als ein Gesamtquerschnittsbereich in der Rückführpassage.

3. Festoxidbrennstoffzelle nach Anspruch 2,
**dadurch gekennzeichnet, daß,**
wenn die Zuführpassage und die Rückführpassage in der Querschnittsform gleich sind, die Anzahl von Stufen der für die Zuführpassage verwendeten Gasflußpassage größer ist als die der Rückführpassage.

4. Festoxidbrennstoffzelle nach Anspruch 1,
**dadurch gekennzeichnet, daß**
kleine Löcher, die die individuellen Flußpassagen verbinden, in einer Trennwand zwischen den Gasflußpassagen der Zuführpassage und der Rückführpassage vorgesehen sind.

5. Festoxidbrennstoffzelle nach Anspruch 1,
**dadurch gekennzeichnet, daß**
jede Einzelzelle im Zustand eines Flächenkontakts durch ein Material mit einer Gasdurchlässigkeit und einer Leitfähigkeit in Reihe montiert ist und in diesem Zustand in einer Ummantelung eingeschlossen ist, die eine Gaszuführkammer zum Zuführen von Gas zu der Zuführpassage in dem Zellensubstrat, eine Ausstoßkammer des von der Rückführpassage rückgeführten Gases und eine Energieerzeugungskammer hat, die mit dem der zweiten Elektrode zugeordneten Gas versorgt wird, wobei von den Gasflußpassagen die Zuführpassage zu der Gaszuführkammer geöffnet ist, die Rückführpassage zu der Gasausstoßkammer geöffnet ist und die einzelzelleneinheit in der Energieerzeugungskammer angeordnet ist, die mit dem der zweiten Elektrode zugeordneten Gas versorgt wird.

6. Festoxidbrennstoffzelle nach Anspruch 1,
**dadurch gekennzeichnet, daß**
(La₁₋ₓSrₓ)_{y}MnO₃ als das erste Elektrodenmaterial, das das Zellensubstrat ausbildet, Nickel-Zirkonerde-Zermet als das zweite Elektrodenmaterial und Zirkoniumoxid, das mit Yttrium-Oxid dotiert ist, als der Elektrolyt verwendet wird.

## Revendications

1. Pile à combustible en oxyde solide, comprenant une électrode, un électrolyte solide et un interconnecteur, une pile unique comprenant l'électrolyte formé sur une première surface principale d'un substrat de pile en un premier matériau d'électrode, une seconde électrode est formée au-dessus de l'électrolyte, et l'interconnecteur est formé sur une seconde surface principale différente de la surface formée avec l'électrolyte le substrat de pile est poreux, de forme plate, et il y est ménagé une pluralité de passages pour du gaz correspondant à la première matière d'électrode, le passage pour du gaz étant formé de multiples étages dans le substrat, ce qui forme une pluralité de passages de gaz servant de passages d'alimentation et une pluralité de passages de gaz servant de passages de retour, ces passages d'alimentation et ces passages de retour communiquant les uns avec les autres en une partie du substrat où le retour du gaz fait demi-tour, et des ouvertures du passage d'alimentation du passage de retour sont disposées sur une surface latérale du substrat,
caractérisée en ce que
le passage pour le gaz ménagé dans le substrat de pile a une structure telle que le débit dans le passage d'alimentation du gaz envoyé au substrat de pile est plus lent que le débit du gaz dans le passage de retour.

2. Pile à combustible en oxyde solide suivant la revendication 1,
caractérisé en ce que
la section transversale totale du passage d'alimentation de gaz prévu dans le substrat de pile est plus grande que la section transversale totale du passage de retour.

3. Pile à combustible en oxyde solide suivant la revendication 2,
caractérisé en ce que
lorsque le passage d'alimentation et le passage de retour ont la même forme de section transversale, le nombre des étages du passage de gaz utilisées pour le passage d'alimentation est supérieur à celui des étages utilisées pour le passage de retour.

4. Pile à combustible en oxyde solide suivant la revendication 1,
caractérisé en ce que
il est prévu dans une cloison entre le passage d'alimentation et le passage de retour de petits trous mettant en communication les passages.

5. Pile à combustible en oxyde solide suivant la revendication 1,
caractérisé en ce que
chaque pile individuelle est montée, dans l'état de contact par une face, en série par l'intermédiaire d'une matière ayant une perméabilité au gaz et de la conductivité, et en cet état est inséré dans une coquille ayant une chambre d'alimentation en gaz destinée à alimenter en gaz le passage d'alimentation du substrat de la pile, une chambre de déchargement du gaz qui revient par le passage de retour, et une chambre pour engendrer de l'énergie alimentée par le gaz correspondant à la seconde électrode, le passage d'alimentation débouchant dans la chambre d'alimentation en gaz, le passage de retour débouchant dans la chambre de déchargement de gaz et l'élément unique de pile est disposé dans la chambre engendrant de l'énergie, qui est alimentée par le gaz correspondant à la seconde électrode.

6. Pile à combustible en oxyde solide suivant la revendication 1,
caractérisé en ce que
il est utilisé comme première matière d'électrode constituant le substrat de pile (La₁₋ₓSrₓ)_{y}MnO₃, un cermet nickel oxyde de zirconium comme seconde matière d'électrode, et un oxyde de zirconium dopé à l'oxyde d'yttrium comme électrolyte.
